# EUROPEAN PATENT APPLICATION

(11) **EP 1 950 756 A1**
(43) Date of publication of application: **30.07.2008**
(21) Application number: 08001235.4
(22) Date of filing: 23.01.2008
(51) Int. Cl.: G11B 7/135, G11B 7/00, G11B 7/125

(54) **Optical pickup**

(30) Priority: 26.01.2007 JP 2007015919
(71) Applicant: Funai Electric Co., Ltd., Daito-shi, Osaka 574-0013 (JP)
(72) Inventor: Ikeda, Atsushi, Daito-shi Osaka 574-0013 (JP); Tanabe, Noritaka, Daito-shi Osaka 574-0013 (JP)
(74) Representative: Grünecker, Kinkeldey, Stockmair & Schwanhäusser Anwaltssozietät

(57) **Abstract**

Two types of objective lenses (11,12) are arranged in a radial direction (Ra) of an optical disc, a light flux reflecting/transmitting member (16) arranged with first (F1) and third (F3) optical films for reflecting the beam light and a second (F2) optical film for reflecting or transmitting the beam light is arranged on the side opposite to the disc of the objective lenses. The beam light emitted from the laser diodes (1,4) is entered to the light flux reflecting/transmitting member in a tangential direction of the disc. The beam light entering the light flux reflecting/transmitting member is reflected with the first optical film to be bent in the radial direction, and the BD beam light is reflected with the second optical film so as to enter to the BD objective lens (11), and the DVD/CD beam light is transmitted through the second optical film, and reflected with the third optical film so as to enter the DVD/CD objective lens (12).

## Description

### BACKGROUND OF THE INVENTION

### 1. Field of the Invention

The present invention relates to a structure of an optical system of an optical pickup equipped with a plurality of types of objective lenses.

### 2. Description of the Related Art

An optical pickup arranged with a plurality of types of objective lenses corresponding to BDs (Blu-ray disc; registered trademark), DVDs (Digital Versatile Disc), and CDs (Compact Disc), and the like is known (see, e.g., the below-described related art documents). This type of optical pickup emits a beam light corresponding to the type of optical disc from a light source, collects the beam light on an optical disc with an objective lens corresponding to the type of optical disc, and performs reproduction and recordation of information with respect to the optical disc. In an axial slide type optical pickup, a plurality of objective lenses is rotated about the axis to switch among the objective lenses for allowing each beam light to enter. In a wire suspension type or a plate spring supporting type optical pickup, the optical path of each beam light is separated by an optical component so that the beam light enters the corresponding objective lens.

In Japanese Unexamined Patent Publication No. 09-212905, a polarization beam splitter and a mirror are arranged on the lower side of two types of objective lenses, where an S polarization component of the beam light is reflected with the polarization beam splitter and entered to one objective lens, a P polarization component is transmitted through the polarization beam splitter and thereafter reflected by a mirror and entered to the other objective lens. In Japanese Patent No. 3031220, two types of objective lenses are arranged in a tangential direction of the optical disc, a prism with beam splitter that is a polarization light flux separation element and also an optical path conversion element are arranged on the lower side of the objective lenses, and other optical components are arranged in the tangential direction and a thickness direction of the optical disc, where one part of the beam light is transmitted through a polarizing surface of the prism with beam splitter and entered to one objective lens, and another part of the beam light is reflected by the polarizing surface and the reflecting surface of the prism with beam splitter and entered to the other objective lens.

In Japanese Unexamined Patent Publication No. 2005-327338, two types of objective lenses are arranged in the tangential direction of the optical disc, a light flux separating/rising part including a beam splitter and a mirror is arranged on the lower side of the objective lenses, and other optical components are arranged in the tangential direction and the thickness direction of the optical disc, where one of the beam lights having different wavelengths is reflected by the beam splitter and entered to one objective lens, and the other beam light is transmitted through the beam splitter and thereafter reflected by the mirror and entered to the other objective lens. In Japanese Unexamined Patent Publication No. 2006-24351, two types of objective lenses are arranged in a radial direction of the optical disc, an optical path switching unit including a liquid crystal element or a polarization beam splitter and a mirror is arranged on the lower side of the objective lenses, and other optical components are arranged in the radial direction of the optical disc, where one beam light is reflected by the liquid crystal element or the polarization beam splitter and entered to one objective lens, and the other beam light is transmitted through the liquid crystal element or the polarization beam splitter and thereafter reflected by the mirror and entered to the other objective lens.

In Japanese Unexamined Patent Publication No. 2004-295983, two types of objective lenses are arranged in the tangential direction of the optical disc, a mirror is arranged on the lower side of each objective lens at different heights, two independent optical system blocks are arranged so as to line with each mirror in the tangential direction of the optical disc, where one of the beam lights having different wavelengths exiting from the corresponding optical system block is reflected by one mirror and entered to one objective lens, and the other beam light is reflected by the other mirror and entered to the other objective lens. Furthermore, in this patent publication, a mirror as a beam splitter and another mirror are arranged on the lower side of the objective lenses, where one of the beam lights having different wavelengths exiting from the corresponding optical system block is reflected by the mirror as a beam splitter and entered to one objective lens, and the other beam light is transmitted through the mirror as a beam splitter and thereafter reflected by the other mirror and entered to the other objective lens.

However, since a complex mechanism for rotating the objective lens is required and the rotating precision thereof must be high in the axial slide type optical pickup, thus the cost becomes high. When two types of objective lenses are arranged in the tangential direction of the optical disc as in Japanese Patent No. 3031220, Japanese Unexamined Patent Publication No. 2005-327338, and Japanese Unexamined Patent Publication No. 2004-295983, the main beam and the sub-beam cannot all be emitted on the track of the same round with at least one objective lens since the angle in the lining direction of the spots of the main beam and the sub-beam with respect to the track of the optical disc differs between each objective lens even when detecting tracking error signals with three beam method which is, in principle, simple and has high stability, and thus the tracking error signals cannot be accurately detected. Furthermore, when a great number of optical components are arranged in line in the tangential direction, the radial direction, or the thickness direction of the optical disc as in all of the above-described related art documents, the optical pickup enlarges in the arrangement direction. Furthermore, when a plurality of independent optical systems is arranged according to the type of optical disc as in Japanese Unexamined Patent Publication No. 2004-295983, the number of components is large, the cost becomes high, and the optical pickup becomes large.

### SUMMARY OF THE INVENTION

The present invention aims to solve the above problems and to provide an optical pickup equipped with a plurality of types of objective lenses in which tracking error signals are accurately detected through a three beam method and lower cost and miniaturization are achieved.

The present invention provides an optical pickup including: a light source for emitting a beam light corresponding to different types of optical discs; a first objective lens for collecting the beam light corresponding to one optical disc on the corresponding optical disc; and a second objective lens for collecting the beam light corresponding to another optical disc on the corresponding optical disc, the optical pickup performing at least one of reproduction and recordation of information on each optical disc with the corresponding beam light, the optical pickup further including a light flux reflecting/transmitting member arranged with a first optical film and a third optical film for reflecting the beam light, and a second optical film for reflecting or transmitting the beam light, wherein the first and second objective lenses are arranged in a radial direction of the optical disc, the light flux reflecting/transmitting member is arranged on a side opposite to the optical disc of the first and second objective lenses, and the beam light emitted from the light source is entered to the light flux reflecting/transmitting member in a tangential direction of the optical disc. The light flux reflecting/transmitting member reflects the entered beam light with the first optical film to be bent in the radial direction of the optical disc, reflects one of the beam lights with the second optical film so as to make the beam light enter the first objective lens, transmits the other beam light through the second optical film and reflects the other beam light with the third optical film so as to make the other beam light enter the second objective lens. Alternatively, the light flux reflecting/transmitting member reflects the entered beam light with the first optical film to be bent in a thickness direction of the optical disc, transmits one of the beam lights through the second optical film so as to make the beam light enter the first objective lens, reflects the other beam light with the second optical film to be bent in the radial direction of the optical disc, and reflects the other beam light with the third optical film so as to make the other beam light enter the second objective lens.

According to this, the optical paths of each beam light emitted from the light source can be separated while being bent from the tangential direction to the radial direction and the thickness direction of the optical disc by the light flux reflecting/transmitting member, and each beam light can be entered to the corresponding objective lens according to the type of the optical disc. Thus, a wire suspension type or a plate spring supporting type having a relatively easy configuration and being easy to manufacture can be employed for the movable configuration of the objective lenses, and other optical components can be commonly used for each objective lens, thereby lowering the cost of the optical pickup. Furthermore, since the first and the third optical films of the light flux reflecting/transmitting member merely reflect the beam light, the configuring number of optical films is reduced, designing and manufacturing are facilitated, and lower cost is achieved. Since the two types of objective lenses are arranged in the radial direction of the optical disc, the angle in the lining direction of the spots of the main beam and the sub-beam with respect to the track of the optical disc is the same for both objective lenses even when the three beam method, which is in principle simple and has high stability, is adopted for the method of detecting the tracking error signal, whereby the main beam and the sub-beam can all be emitted on the track of the same round with both objective lenses, and the tracking error signal can be accurately detected. Moreover, the objective lenses are arranged in the radial direction of the optical disc, the objective lenses and the light flux reflecting/transmitting member are arranged in the thickness direction of the optical disc, and the other optical components are arranged in the tangential direction of the optical disc to allow the beam light to enter to the light flux reflecting/transmitting member in the tangential direction of the optical disc, and thus the number of components to be arranged in the radial direction, the thickness direction, and the tangential direction are reduced, and miniaturization of the optical pickup can be achieved. In the case of the light flux reflecting/transmitting member for bending the optical path of each beam light from the tangential direction to the radial direction with the first optical film, the occupying space in the thickness direction is reduced, and the optical pickup is further miniaturized.

According to the present invention, in the optical pickup, the light flux reflecting/transmitting member may include one compound prism integrally arranged with the first, the second, and the third optical films. Thus, the precision and the efficiency in assembly of the light flux reflecting/transmitting member can be enhanced while suppressing errors in the relative position and the relative angle of each optical film.

According to the present invention, in the optical pickup, the light flux reflecting/transmitting member may include one mirror integrally arranged with the first optical film and one compound prism integrally arranged with the second and the third optical films. Therefore, lower cost is achieved by using an existing mirror. Furthermore, the position and the angle of attachment of the mirror and the compound prism can be independently adjusted. The precision and the efficiency in assembly of the light flux reflecting/transmitting member can be enhanced while suppressing errors in the relative position and the relative angle of the second and the third optical films.

According to the present invention, in the optical pickup, the light flux reflecting/transmitting member may include three mirrors integrally arranged with the first, the second, and the third optical film, respectively. Therefore, lower cost is achieved by using an existing mirror. Furthermore, the position and the angle of attachment of each mirror can be independently adjusted.

According to the present invention, in the optical pickup, the second optical film of the light flux reflecting/transmitting member may include a wavelength selection film for selectively reflecting or transmitting each beam light according to its wavelength. When separating the optical paths of the beam lights through polarization as in Japanese Unexamined Patent Publication No. 09-212905, Japanese Patent No. 3031220, and Japanese Unexamined Patent Publication No. 2006-24351, the configuring number of films at the polarizing surface of the polarization beam splitter or the like increases, whereby the wavefront aberration becomes larger, designing and manufacturing of the film become difficult, and the cost increases. On the other hand, according to the configuration described above, since the optical path of each beam light is separated according to the wavelength by the second optical film, the configuring number of optical film is decreased, whereby the wavefront aberration becomes smaller, designing and manufacturing are facilitated, and lower cost is further achieved.

According to the present invention, in the optical pickup, the light source may emit a first beam light having a first wavelength, a second beam light having a second wavelength longer than the first wavelength, and a third beam light having a third wavelength longer than the second wavelength. The second optical film of the light flux reflecting/transmitting member may reflect the first beam light and transmits the second and third beam lights. Alternatively, the second optical film of the light flux reflecting/transmitting member may transmit the first beam light and reflects the second and third beam lights. According to these, the first beam light and the second and third beam lights are separated to reflection beam light and transmission beam light according to the wavelengths by the second optical film, and respectively entered to the corresponding objective lenses. When the optical film for reflecting the first beam light is arranged rather than the optical film for transmitting the first beam light having a short wavelength, for the second optical film in the light flux reflecting/transmitting member, the number of second optical film decreases, the wavefront aberration becomes smaller, designing and manufacturing are facilitated, and lowering in cost is further achieved.

According to a typical embodiment of the present invention, the optical pickup including: a light source for emitting a first beam light corresponding to a BD, a second beam light corresponding to a DVD, and a third beam light corresponding to a CD; a first objective lens for collecting the first beam light on the BD; and a second objective lens for collecting the second or the third beam light on the DVD or the CD, the optical pickup performing at least one of reproduction and recordation of information on each optical disc with the corresponding beam light, the optical pickup further including a light flux reflecting/transmitting member including one compound prism integrally arranged with a first optical film, a second optical film, and a third optical film, wherein the first and third optical films include a total reflection film for reflecting the beam light, the second optical film includes a dichroic film for selectively reflecting or transmitting the beam light according to its wavelength, the first and second objective lenses are arranged in a radial direction of the optical disc, the light flux reflecting/transmitting member is arranged on a side opposite to the optical disc of the first and second objective lenses, and the beam light emitted from the light source is entered to the light flux reflecting/transmitting member in a tangential direction of the optical disc. The light flux reflecting/transmitting member reflects the entered beam light with the first optical film to be bent in the radial direction of the optical disc, reflects the first beam light with the second optical film so as to make the first beam light enter the first objective lens, transmits the second or third beam light through the second optical film, and reflects the second or third beam light with the third optical film so as to make the second or third beam light enter the second objective lens. Alternatively, the light flux reflecting/transmitting member may include one mirror integrally arranged with a first optical film and one compound prism integrally arranged with a second optical film and a third optical film, reflects the entered beam light with the first optical film to be bent in a thickness direction of the optical disc, transmits the second or the third beam light with the second optical film so as to make the second or third beam light enter the second objective lens, reflects the first beam light with the second optical film to be bent in the radial direction of the optical disc, and reflects the first beam light with the third optical film so as to make the first beam light enter the first objective lens.

According to this, the tracking error signal can be accurately detected through the three beam method with each objective lens, and lowering in cost and miniaturization of the optical pickup can be achieved. Furthermore, the precision and the efficiency in assembly of the light flux reflecting/transmitting member can be enhanced by using the light flux reflecting/transmitting member including one compound prism. By using the light flux reflecting/transmitting member including one mirror and one compound prism, lower cost can be achieved by using an existing mirror, the position and the angle of attachment of the mirror and the compound prism can be independently adjusted, and the precision and the efficiency in assembly of the light flux reflecting/transmitting member can be enhanced. Moreover, since the first and third optical films of the light flux reflecting/transmitting member include a total reflection film, and the second optical film includes a dichroic film for reflecting the first beam light of a short wavelength, the configuring number of each optical film is decreased, the wavefront aberration becomes smaller, designing and manufacturing are facilitated, and lowering in cost is further achieved.

According to the present invention, the tracking error signal is accurately detected through the three beam method and lowering in cost and miniaturization are achieved in the optical pickup equipped with a plurality of types of objective lenses.

### BRIEF DESCRIPTION OF THE DRAWINGS

Fig. 1 is a diagram showing an optical pickup;
Fig. 2 is a diagram showing an optical system of the optical pickup;
Figs. 3A and 3B are diagrams showing a light flux reflecting/transmitting member;
Figs. 4A and 4B are diagrams showing another light flux reflecting/transmitting member;
Figs. 5A and 5B are diagrams showing another light flux reflecting/transmitting member;
Fig. 6 is a diagram showing characteristics of films of the light flux reflecting/transmitting member;
Fig. 7 is a diagram showing another optical system of an optical pickup;
Figs. 8A and 8B are diagrams showing another light flux reflecting/transmitting member;
Fig. 9 is a diagram showing characteristics of films of another light flux reflecting/transmitting member;
Figs. 10A and 10B are diagrams showing another light flux reflecting/transmitting member;
Figs. 11A and 11B are diagrams showing another light flux reflecting/transmitting member;
Figs. 12A and 12B are diagrams showing another light flux reflecting/transmitting member;
Fig. 13 is a diagram showing characteristics of films of another light flux reflecting/transmitting member;
Figs. 14A and 14B are diagrams showing another light flux reflecting/transmitting member; and
Fig. 15 is a diagram showing characteristics of films of another light flux reflecting/transmitting member.

### DETAILED DESCRIPTION OF THE PREFERRED EMBODIMENTS

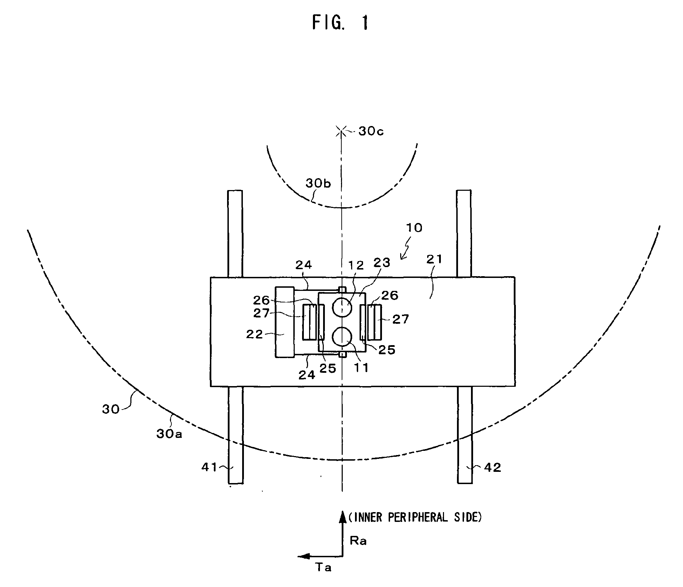

Fig. 1 is a diagram showing an optical pickup 10 according to an embodiment of the present invention. The optical pickup 10 performs reproduction or recordation of information on each optical disc 30 of a BD, a DVD, or a CD with the corresponding beam light. The optical disc 30 is set above the optical pickup 10. The optical disc 30 has an outer peripheral edge 30a, an inner peripheral edge 30b, and a center 30c. A feeding board 21 is supported by a lead screw 41 and a guide shaft 42. The lead screw 41 and the guide shaft 42 are parallel in a radial direction Ra of the optical disc 30. A fixing unit 22 is fixed on the feeding board 21. An elastic member 24 made of a wire or a plate spring is attached to the fixing unit 22 parallel to a tangential direction Ta of the disc 30. The elastic member 24 cantilever-supports a movable unit 23. In the figure, an arrow is given to point out one side of the tangential direction Ta and the radial direction Ra of the optical disc 30 for the sake of convenience.

Two types of objective lenses 11, 12 are attached to the movable unit 23. The optical axes of the objective lenses 11, 12 are parallel to the thickness direction of the optical disc 30 in a stationary state. The BD objective lens 11 collects the BD beam light corresponding to the BD on the BD. The DVD/CD objective lens 12 collects the DVD beam light corresponding to the DVD or the CD beam light corresponding to the CD on the DVD or the CD. The objective lenses 11, 12 are arranged in the radial direction Ra of the optical disc 30.

A magnet 25 is attached to both side surfaces of the movable unit 23. A focus coil 26 and a tracking coil 27 are attached to the feeding board 21 so as to face the magnet 25. The magnetic force of the magnet 25 and the focus coil 26 causes the movable unit 23 and the objective lenses 11, 12 to microscopically reciprocate in the focusing direction (thickness direction of the disc 30). The magnetic force of the magnet 25 and the tracking coil 27 causes the movable unit 23 and the objective lenses 11, 12 to microscopically reciprocate in the tracking direction (radial direction Ra of the disc 30). That is, the movable configuration of the objective lenses 11, 12 of the optical pickup 10 is a wire suspension type or a plate spring supporting type. The optical pickup 10 reciprocates in the radial direction Ra of the optical disc 30 when the feeding board 21 is fed by a feeding mechanism including the lead screw 41, the guide shaft 42, and a motor and a gear group (not shown).

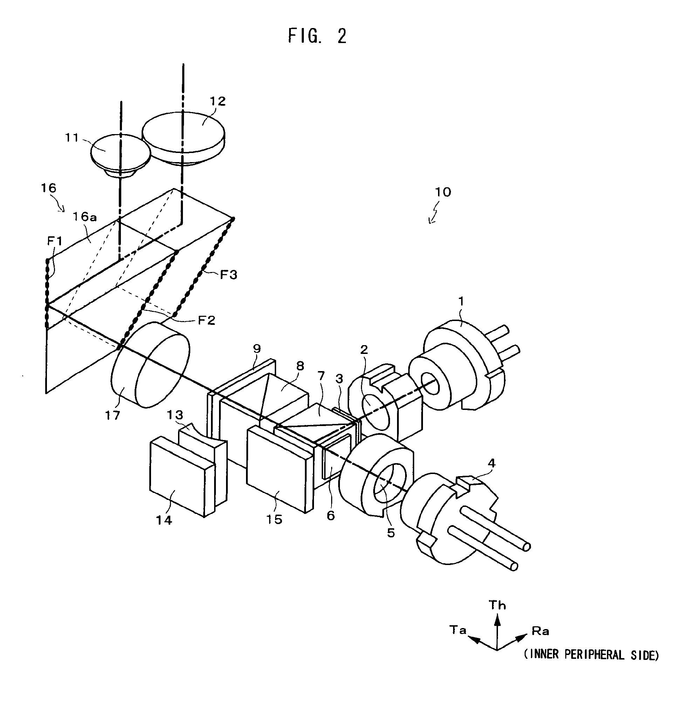

Fig. 2 is a diagram showing an optical system of the optical pickup 10. Although not shown, the optical disc 30 is set above the objective lenses 11, 12. The DVD/CD objective lens 12 is arranged on the inner peripheral side of the optical disc 30 than the BD objective lens 11. A BD laser diode 1, a BD diffraction grating 2, a BD λ/2 plate 3, a dichroic prism 7, and a forward scattered light detector 15 are arranged in the radial direction Ra of the optical disc 30. A DVD/CD laser diode 4, a DVD/CD diffraction grating 5, a DVD/CD λ/2 plate 6, the dichroic prism 7, a polarization beam splitter 8, a λ/4 plate 9, a collimator lens 17, and a light flux reflecting/transmitting member 16 are arranged in the tangential direction Ta of the optical disc 30. The light flux reflecting/transmitting member 16 and each objective lens 11, 12 are arranged in a thickness direction Th of the optical disc 30. The polarization beam splitter 8, a cylindrical lens 13, and a photodetector 14 are arranged in the radial direction Ra of the optical disc 30.

The BD laser diode 1 is a light source for emitting the BD beam light corresponding to the BD. The DVD/CD laser diode 4 is a light source for emitting the DVD beam light corresponding to the DVD and the CD beam light corresponding to the CD. The BD beam light is a blue light having a wavelength of 405 nm. The DVD beam light is a red light having a wavelength of 650 nm. The CD beam light is a near infrared light having a wavelength of 780 nm. That is, the order of wavelength from the shortest side is BD beam light, the DVD beam light, and the CD beam light. A control unit (not shown) arranged in the optical pickup 10 makes the laser diodes 1, 4 emit either of the beam lights according to the type of the installed optical disc 30.

As shown with a chain dashed line, the BD beam light emitted in the radial direction Ra from the BD laser diode 1 is transmitted through the BD diffraction grating 2, the BD λ/2 plate 3, and the dichroic prism 7, and then entered into the polarization beam splitter 8. In this case, the BD beam light is divided into a main beam and a sub-beam (± 1 order diffracted light) by the BD diffraction grating 2, and has the polarizing direction rotated by 90° by the BD λ/2 plate 3 and the optical path bent to the tangential direction Ta by the dichroic prism 7. The scattered light of the BD beam light is received by the forward scattered light detector 15. The forward scattered light detector 15 converts the received scattered light to an electrical signal, detects a signal indicating the quantity of light, and outputs the signal to the control unit of the optical pickup 10. The control unit of the optical pickup 10 controls the drive of the BD laser diode 1 based on the light quantity signal outputted from the forward scattered light detector 15, and maintains the power of the emitting BD beam light constant.

As shown with a chain double-dashed line, the DVD/CD beam light (DVD beam light or CD beam light) emitted in the tangential direction Ta from the DVD/CD laser diode 4 is transmitted through the DVD/CD diffraction grating 5, the DVD/CD λ/2 plate 6, and the dichroic prism 7, and entered into the polarization beam splitter 8. In this case, the DVD/CD beam light is divided into a main beam and a sub-beam by the DVD/CD diffraction grating 5, and has the polarizing direction rotated by 90° by the DVD/CD λ/2 plate 6. The optical path of the BD beam light from the BD laser diode 1 and the optical path of the DVD/CD beam light from the DVD/CD laser diode 4 coincide in the dichroic prism 7.

The BD/DVD/CD beam light (BD beam light, DVD beam light, or CD beam light) entering the polarization beam splitter 8 from the dichroic prism 7 is transmitted through the polarization beam splitter 8, and thereafter transmitted through the λ/4 plate 9 to have the polarizing direction rotated by 45°, transmitted through the collimator lens 17 to be converted to a parallel light, and entered to the light flux reflecting/transmitting member 16 in the tangential direction Ta. The light flux reflecting/transmitting member 16 includes one compound prism 16a. The optical path of the BD/DVD/CD beam light entering the light flux reflecting/transmitting member 16 is separated while being bent from the tangential direction Ta to the radial direction Ra and the thickness direction Th by the light flux reflecting/transmitting member 16, as will be described later. The BD beam light is then entered to the BD objective lens 11 from the light flux reflecting/transmitting member 16 and collected on the optical disc 30 of the BD by the BD objective lens 11. The DVD/CD beam light is entered to the DVD/CD objective lens 12 from the light flux reflecting/transmitting member 16 and collected on the optical disc 30 of the DVD or CD by the DVD/CD objective lens 12.

When the BD/DVD/CD beam light is reflected by a recording layer of the optical disc 30, the reflected light has the optical paths coincided while being bent from the thickness direction Th to the radial direction Ra and the tangential direction Ta by the light flux reflecting/transmitting member 16, transmitted through the collimator lens 17 and the λ/4 plate 9, and entered to the polarization beam splitter 8. The reflected light having the optical path bent from the tangential direction Ta to the radial direction Ra by the polarization beam splitter 8 is transmitted through the cylindrical lens 13 and received by the photodetector 14. The photodetector 14 converts the received reflected light to an electrical signal, detects a focus error signal, a tracking error signal, a reproduction signal, and other signals related to aberration and light quantity, and outputs the signals to the control unit of the optical pickup 10. The focus error signal is detected through the astigmatism method. The tracking error signal is detected through the three beam method. The control unit of the optical pickup 10 performs reproduction or recordation of information on each optical disc 30 while performing focus or tracking servo based on each signal outputted from the photodetector 14.

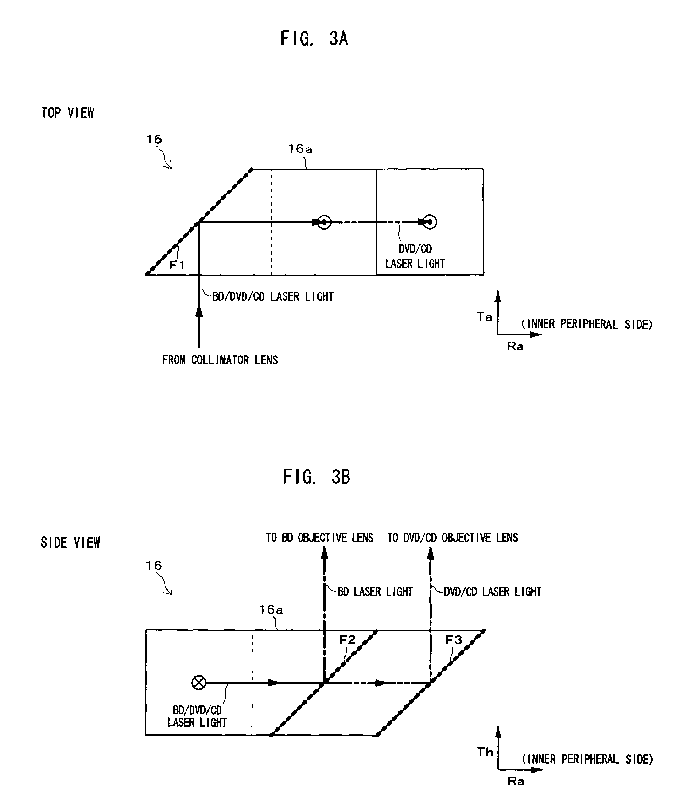

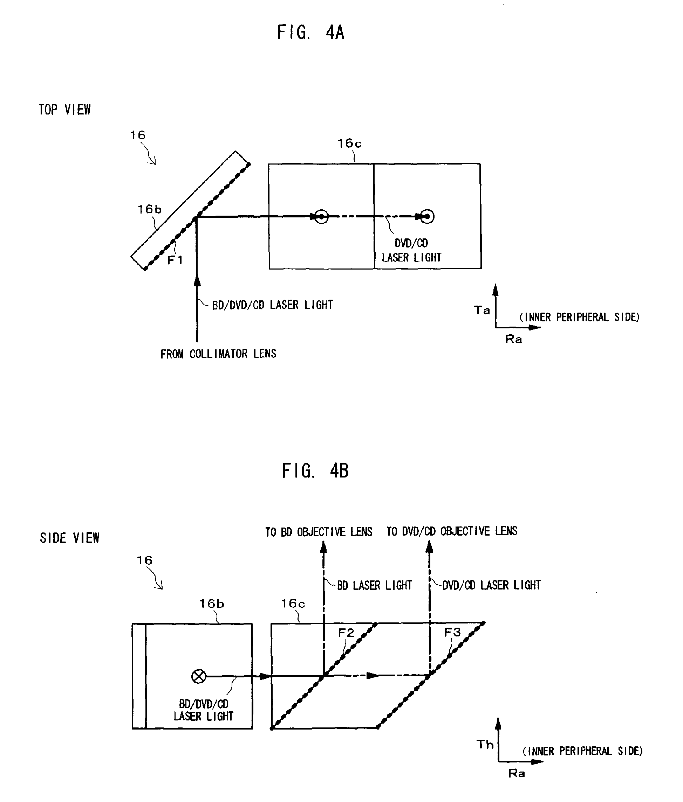

Figs. 3A and 3B are diagrams showing the light flux reflecting/transmitting member 16. Specifically, Fig. 3A is a top view (view seen from the objective lens 11, 12 side) of the light flux reflecting/transmitting member 16. Fig. 3B is a side view (view seen from the collimator lens 17 side) of the light flux reflecting/transmitting member 16. In Figs. 3A and 3B, the optical axis of the BD/DVD/CD beam light is shown with a solid line, the optical axis of the BD beam light is shown with a chain dashed line, and the optical axis of the DVD/CD beam light is shown with a chain double-dashed line. This is the same in Fig. 2 described above, as well as Figs. 4A to 5B, 7 to 8B, 10A to 12B, 14A and 14B to be described later.

Three optical films F1 to F3 are integrally arranged on a compound prism 16a configuring the light flux reflecting/transmitting member 16. The first optical film F1 and the third optical film F3 are total reflection films for reflecting all the BD/DVD/CD beam lights. The second optical film F2 is a wavelength selection film for selectively reflecting or transmitting the BD/DVD/CD beam light depending on the wavelength. Specifically, the second optical film F2 is a dichroic film, which is one example of the wavelength selection film, that reflects the BD beam light having a short wavelength and transmits the DVD/CD beam light having a long wavelength. The first optical film F1 is arranged at an angle of 45° with respect to the tangential direction Ta and the radial direction Ra of the optical disc 30 so as to face the collimator lens 17 (Fig. 2) and the optical films F2, F3. The second optical film F2 and the third optical film F3 are arranged at an angle of 45° with respect to the radial direction Ra and the thickness direction Th of the optical disc 30 so as to face the first optical film F1 and each objective lens 11, 12 (Fig. 2). The optical films F1 to F3 are arranged in the order of the first optical film F1, the second optical film F2, and the third optical film F3 in the radial direction Ra from the outer peripheral edge 30a towards the inner peripheral edge 30b of the optical disc 30.

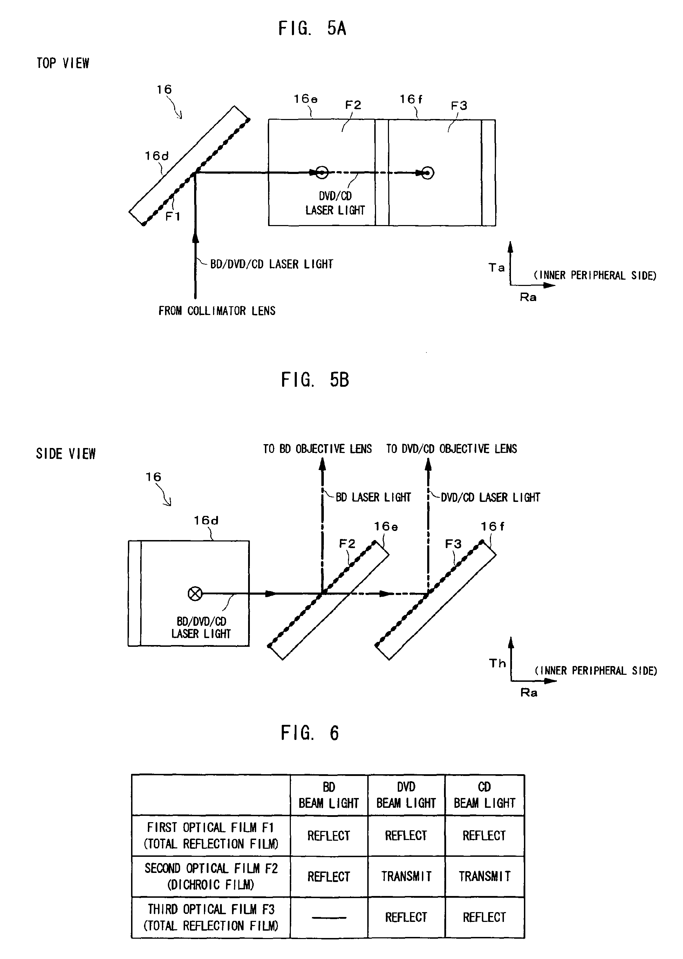

The BD/DVD/CD beam light exiting from the collimator lens 17 enters the compound prism 16a in the tangential direction Ta as shown with a solid line in Fig. 3A, and is reflected by the first optical film F1 to be bent by 90° in the radial direction Ra and entered to the second optical film F2 as shown in Fig. 3B. The BD beam light is reflected by the second optical film F2 to be bent by 90° in the thickness direction Th as shown with a chain dashed line in Fig. 3B, and entered to the BD objective lens 11. The DVD/CD beam light is transmitted through the second optical film F2 as shown with chain double-dashed lines in Figs. 3A and 3B, reflected by the third optical film F3 to be bent by 90° in the thickness direction Th and entered to the DVD/CD objective lens 12. The reflected light from the optical disc 30 of the BD/DVD/CD beam light enters the collimator lens 17 in the reverse order. Fig. 6 is a list of characteristics of the optical films F1 to F3.

In the above embodiment, the light flux reflecting/transmitting member 16 including one compound prism 16a is used, but in place thereof, the light flux reflecting/transmitting member 16 including one mirror 16b and one compound prism 16c may be used as shown in Figs. 4A and 4B. The first optical film F1 is integrally arranged on the mirror 16b. The second optical film F2 and the third optical film F3 are integrally arranged on the compound prism 16c. The configuration, function, and arrangement state of the optical films F1 to F3 are similar to the above, and thus redundant description will be omitted. The BD/DVD/CD beam light exiting from the collimator lens 17 enters the first optical film F1 of the mirror 16b in the tangential direction Ta as shown with a solid line in Fig. 4A, and is reflected by the first optical film F1 to be bent by 90° in the radial direction Ra and entered to the compound prism 16c and the second optical film F2 as shown in Figs. 4A and 4B. The BD beam light is reflected by the second optical film F2 to be bent by 90° in the thickness direction Th as shown with a chain dashed line in Fig. 4B, and entered to the BD objective lens 11. The DVD/CD beam light is transmitted through the second optical film F2 as shown with chain double-dashed lines in Figs. 4A and 4B, reflected by the third optical film F3 to be bent by 90° in the thickness direction Th and entered to the DVD/CD objective lens 12. The reflected light from the optical disc 30 of the BD/DVD/CD beam light enters the collimator lens 17 in the reverse order. The characteristics of the optical films F1 to F3 are as shown in Fig. 6.

The light flux reflecting/transmitting member 16 including three mirrors 16d to 16f may also be used as shown in Figs. 5A and 5B. The first optical film F1, the second optical film F2, and the third optical film F3 are each integrally arranged on the mirrors 16d to 16f. The configuration, function, and arrangement state of the optical films F1 to F3 are similar to the above, and thus redundant description will be omitted. The BD/DVD/CD beam light exiting from the collimator lens 17 enters the first optical film F1 of the mirror 16d in the tangential direction Ta as shown with a solid line in Fig. 5A, and is reflected by the first optical film F1 to be bent by 90° in the radial direction Ra and entered to the second optical film F2 of the mirror 16e as shown in Figs. 5A and 5B. The BD beam light is reflected by the second optical film F2 to be bent by 90° in the thickness direction Th as shown with a chain dashed line in Fig. 5B, and entered to the BD objective lens 11. The DVD/CD beam light is transmitted through the second optical film F2 as shown with chain double-dashed lines in Figs. 5A and 5B, reflected by the third optical film F3 of the mirror 16f to be bent by 90° in the thickness direction Th and entered to the DVD/CD objective lens 12. The reflected light from the optical disc 30 of the BD/DVD/CD beam light enters the collimator lens 17 in the reverse order. The characteristics of the optical films F1 to F3 are as shown in Fig. 6.

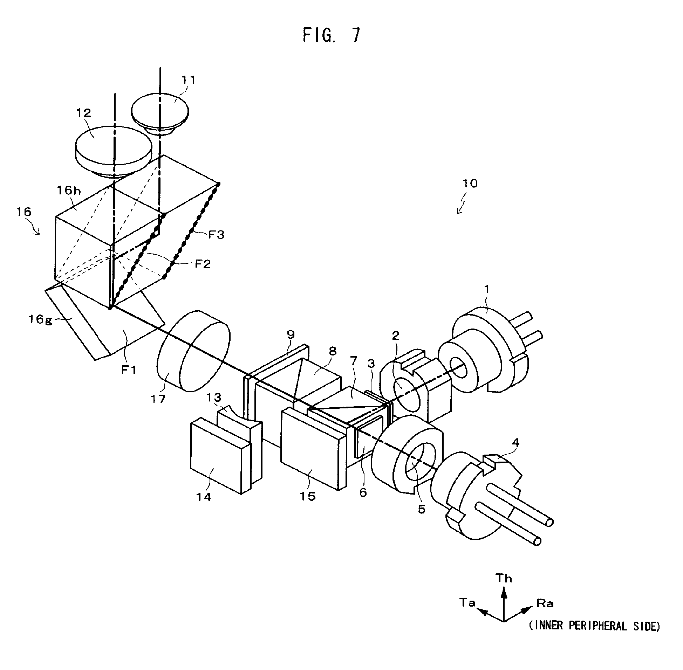

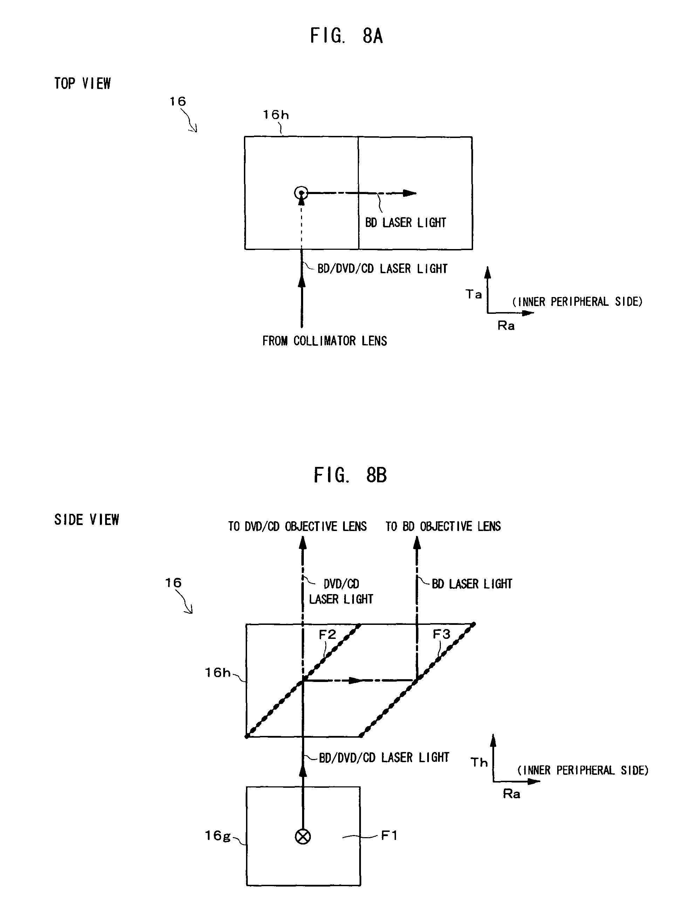

Furthermore, the light flux reflecting/transmitting member 16 including one mirror 16g and one compound prism 16h may be used as shown in Figs. 7, 8A and 8B. The mirror 16g and the previously described optical components 4 to 9, and 17 are arranged in the tangential direction Ta of the optical disc 30. The mirror 16g, the compound prism 16h, and the objective lenses 11, 12 are arranged in the thickness direction Th of the optical disc 30. The first optical film F1 is arranged on the mirror 16g. The second optical film F2 and the third optical film F3 are arranged on the compound prism 16h. The first optical film F1 is arranged at an angle of 45° with respect to the tangential direction Ta and the thickness direction Th of the optical disc 30 so as to face the collimator lens 17 and the second optical film F2. The second optical film F2 is arranged at an angle of 45° with respect to the radial direction Ra and the thickness direction Th of the optical disc 30 so as to face the first optical film F1 and the third optical film F3. The third optical film F3 is arranged on the inner peripheral side of the optical disc 30 than the second optical film F2 so as to be parallel to the second optical film F2 and face the second optical film F2. The configuration and the function of the optical films F1 to F3 are similar to the above, and thus redundant description will be omitted.

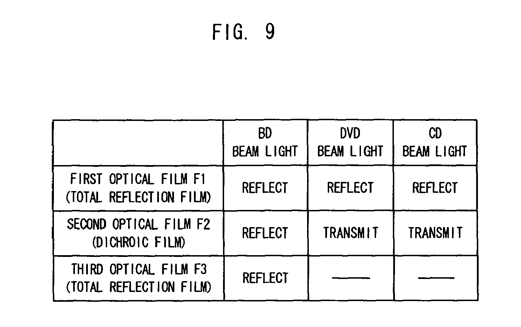

In the above case, as shown in Fig. 7, the DVD/CD objective lens 12 is arranged above (optical disc 30 side) the second optical film F2 of the compound prism 16h, and the BD objective lens 11 is arranged above the third optical film F3. That is, the objective lenses 11, 12 are arranged in the radial direction Ra of the optical disc 30 so that the BD objective lens 11 is positioned on the inner peripheral side of the optical disc 30 than the DVD/CD objective lens 12. Thus, the BD/DVD/CD beam light exiting from the collimator lens 17 enters the first optical film F1 of the mirror 16g in the tangential direction Ta, as shown with solid lines and broken lines in Figs. 8A and 8B, and is reflected by the first optical film F1 to be bent by 90° in the thickness direction Th and entered to the second optical film F2 of the compound prism 16h, as shown in Fig. 8B. The DVD/CD beam light is transmitted through the second optical film F2 as shown with a chain double-dashed line in Fig. 8B, and entered to the DVD/CD objective lens 12. The BD beam light is reflected by the second optical film F2 to be bent by 90° in the radial direction Ra as shown with chain dashed lines in Figs. 8A and 8B, reflected by the third optical film F3 of the compound prism 16h to be bent by 90° in the thickness direction Th, and entered to the BD objective lens 11. The reflected light from the optical disc 30 of the BD/DVD/CD beam light enters the collimator lens 17 in the reverse order. Fig. 9 is a list of characteristics of the optical films F1 to F3.

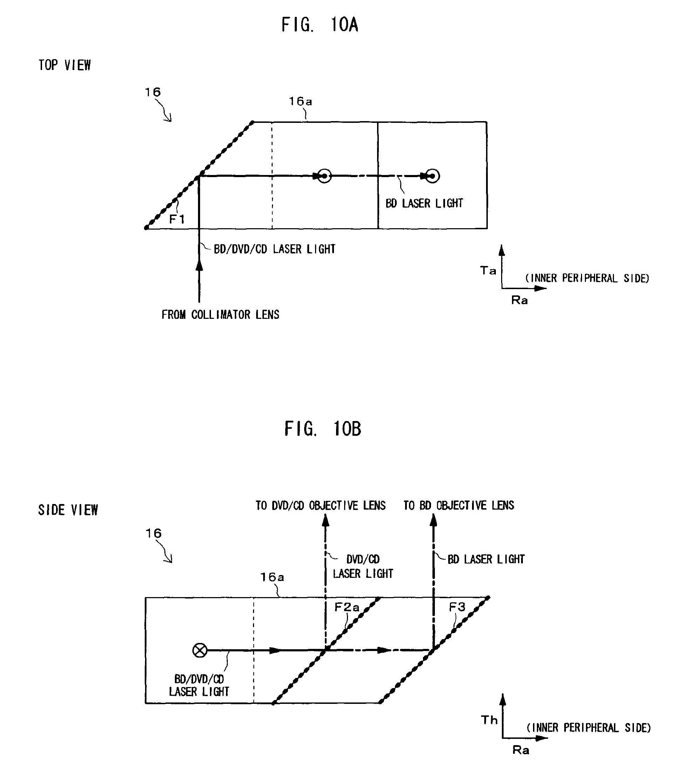

In the above description, the second optical film F2 for reflecting the BD beam light having a short wavelength and transmitting the DVD/CD beam light having a long wavelength is arranged on the light flux reflecting/transmitting member 16, but a second optical film F2a for transmitting the BD beam light having a short wavelength and reflecting the DVD/CD beam light having a long wavelength may be arranged in the light flux reflecting/transmitting member 16 as shown in Figs. 10A to 15. The second optical film F2a is a dichroic film.

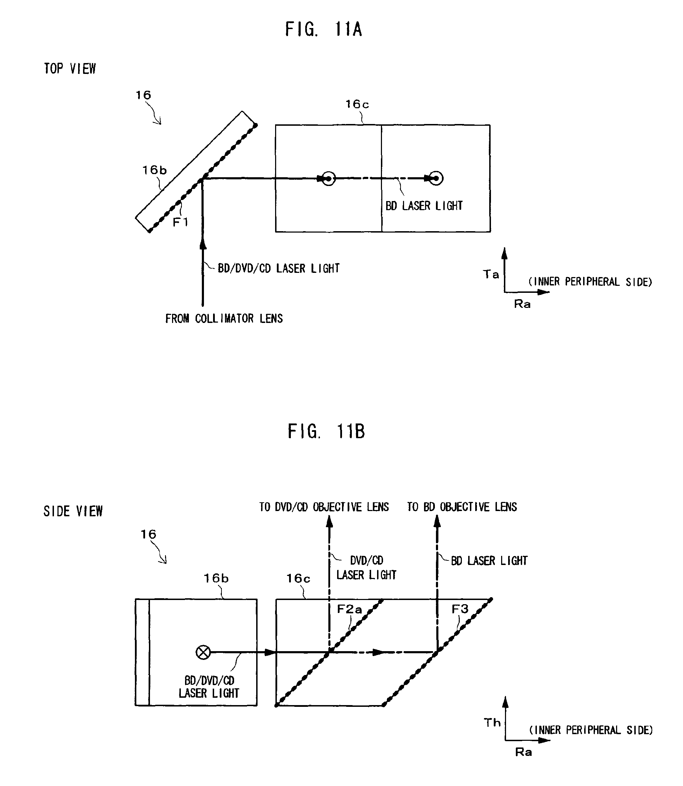

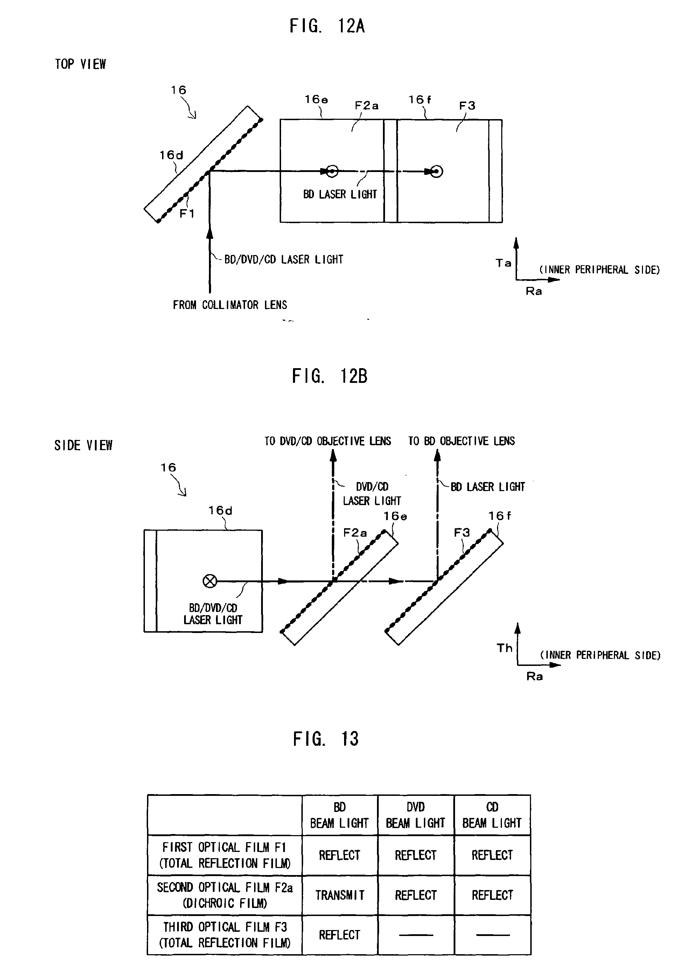

When the second optical film F2a is arranged on the compound prism 16a as shown in Figs. 10A and 10B, when the second optical film F2a is arranged on the compound prism 16c as shown in Figs. 11A and 11B, or when the second optical film F2a is arranged on the mirror 16e as shown in Figs. 12A and 12B, the objective lenses 11, 12 are arranged as shown in Fig. 7, where the DVD/CD objective lens 12 is arranged above the second optical film F2a, and the BD objective lens 11 is arranged above the third optical film F3. Thus, the BD/DVD/CD beam light exiting from the collimator lens 17 enters the first optical film F1 in the tangential direction Ta as shown with solid lines in Figs. 10A, 11A, and 12A, and is reflected by the first optical film F1 to be bent by 90° in the radial direction Ra and entered to the second optical film F2a as shown in Figs. 10A to 12B. The DVD/CD beam light is reflected by the second optical film F2a as shown with chain double-dashed lines in Figs. 10B, 11B, and 12B to be bent by 90° in the thickness direction Th, and entered to the DVD/CD objective lens 12. The BD beam light is transmitted through the second optical film F2a as shown with chain dashed lines in Figs. 10A to 12B, reflected by the third optical film F3 to be bent by 90° in the thickness direction Th, and entered to the BD objective lens 11. The reflected light from the optical disc 30 of the BD/DVD/CD beam light enters the collimator lens 17 in the reverse order. Fig. 13 is a list of characteristics of the optical films F1, F2a, and F3.

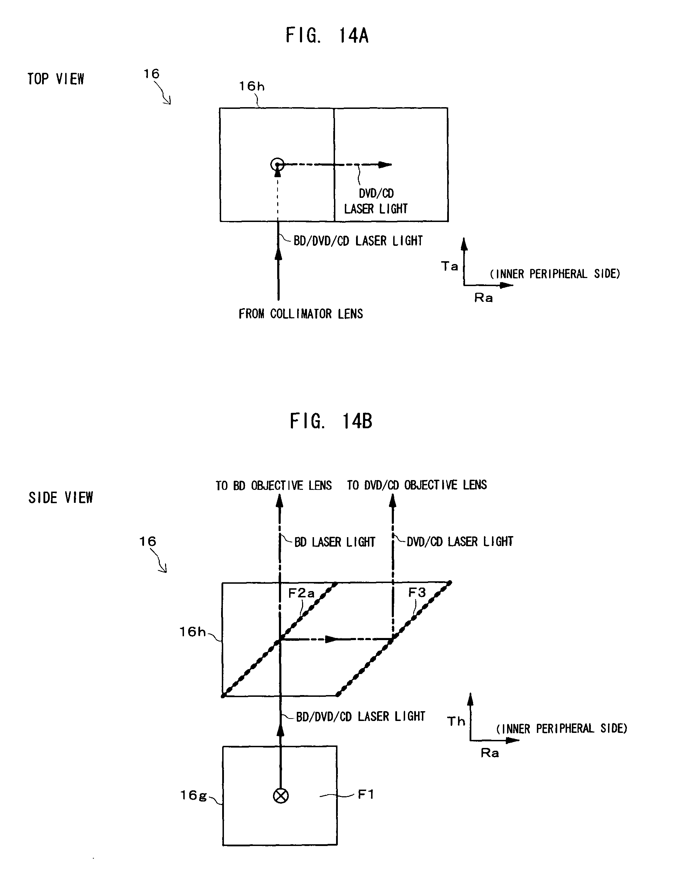

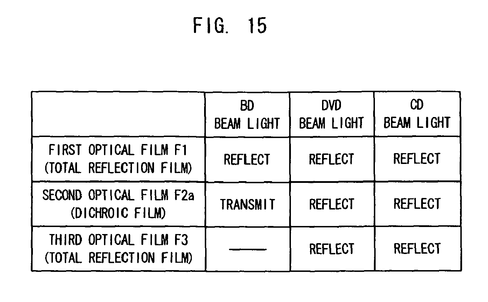

When the second optical film F2a is arranged on the compound prism 16h as shown in Figs. 14A and 14B, the objective lenses 11, 12 are arranged as shown in Fig. 2, where the BD objective lens 11 is arranged above the second optical film F2a, and the DVD/CD objective lens 12 is arranged above the third optical film F3. Thus, the BD/DVD/CD beam light exiting from the collimator lens 17 enters the first optical film F1 in the tangential direction Ta as shown with solid lines and broken lines in Figs. 14A and 14B, and is reflected by the first optical film F1 to be bent by 90° in the thickness direction Th, and entered to the second optical film F2a as shown in Fig. 14B. The BD beam light is transmitted through the second optical film F2a as shown with a chain dashed line in Fig. 14B, and entered to the BD objective lens 11. The DVD/CD beam light is reflected by the second optical film F2a as shown with chain double-dashed lines in Figs. 14A and 14B to be bent by 90° in the radial direction Ra, reflected by the third optical film F3 to be bent by 90° in the thickness direction Th, and entered to the DVD/CD objective lens 12. The reflected light from the optical disc 30 of the BD/DVD/CD beam light enters the collimator lens 17 in the reverse order. Fig. 15 is a list of characteristics of the optical films F1, F2a, and F3.

According to the above embodiment, the optical paths of the BD/DVD/CD beam lights emitted from the laser diodes 1, 4 can be separated while being bent from the tangential direction Ta to the radial direction Ra and the thickness direction Th of the optical disc 30 by the light flux reflecting/transmitting member 16, and each beam light can be entered to the corresponding objective lens 11, 12 according to the type of optical disc 30. Thus, a wire suspension type or a plate spring supporting type having a relatively easy configuration and being easy to manufacture can be employed for the movable configuration of the objective lenses 11, 12, and other optical components 7 to 9, 13, 14, 16, 17, and the like can be commonly used for each objective lens 11, 12 thereby lowering the cost of the optical pickup 10. Furthermore, since the first optical film F1 and the third optical film F3 of the light flux reflecting/transmitting member 16 merely reflect beam light, the configuring number of optical films F1, F3 is reduced, designing and manufacturing are facilitated, and lower cost is achieved.

Since the two types of objective lenses 11, 12 are arranged in the radial direction Ra of the optical disc 30, the angle in the lining direction of the spots of the main beam and the sub-beam with respect to the track of the optical disc 30 is the same for the objective lenses 11, 12 even when the three beam method, which is in principle simple and has high stability, is adopted for the method of detecting the tracking error signal, whereby the main beam and the sub-beam can all be emitted on the track of the same round with both objective lenses 11, 12, and the tracking error signal can be accurately detected.

The objective lenses 11, 12 are arranged in the radial direction Ra of the optical disc 30, the objective lenses 11, 12 and the light flux reflecting/transmitting member 16 are arranged in the thickness direction Th of the optical disc 30, and the other optical components 4 to 9, 17, and the like are arranged in the tangential direction Ta of the optical disc 30 to allow the beam light to enter the light flux reflecting/transmitting member 16 in the tangential direction Ta of the optical disc 30, and thus the number of components to be arranged in the radial direction Ra, the thickness direction Th, and the tangential direction Ta are reduced, and miniaturization of the optical pickup 10 can be achieved. In the case of the light flux reflecting/transmitting member 16 for bending the optical path of each beam light from the tangential direction Ta to the radial direction Ra with the first optical film F1 as shown in Figs. 3A to 5B and Figs. 10A to 12B, the occupying space in the thickness direction Th is reduced and the optical pickup 10 is further miniaturized.

Through the use of the light flux reflecting/transmitting member 16 including one compound prism 16a integrally arranged with all the three optical films F1 to F3 as shown in Figs. 3A, 3B, 10A and 10B, the precision and the efficiency in assembly of the light flux reflecting/transmitting member 16 can be enhanced while suppressing errors in the relative position and the relative angle of each of the optical films F1 to F3.

Through the use of the light flux reflecting/transmitting member 16 including one mirror 16b/16g integrally arranged with the first optical film F1 and one compound prism 16c/16h integrally arranged with the second optical film F2/F2a and the third optical film F3 as shown in Figs. 4A, 4B, 8A, 8B, 11A, 11B, 14A, and 14B, lower cost is achieved by using an existing mirror for the mirror 16b/16g. Furthermore, the position and the angle of attachment of the mirror 16b/16g and the compound prism 16c/16h can be independently adjusted. The precision and the efficiency in assembly of the light flux reflecting/transmitting member 16 can be enhanced while suppressing errors in the relative position and the relative angle of the second optical film F2/F2a and the third optical film F3.

Furthermore, through the use of the light flux reflecting/transmitting member 16 including three mirrors 16d to 16f integrally arranged with the corresponding three optical films F1 to F3 as shown in Figs. 5A, 5B, 12A, and 12B, lower cost is further achieved by using an existing mirror for the mirrors 16d to 16f. Additionally, the position and the angle of attachment of each of the mirrors 16d to 16f can be independently adjusted.

In the case of separating the optical paths of the beam lights through polarization as in Japanese Unexamined Patent Publication No. 09-212905, Japanese Patent No. 3031220, and Japanese Unexamined Patent Publication No. 2006-24351, the configuring number of films at the polarizing surface of the polarization beam splitter or the like increases, whereby the wavefront aberration becomes larger, designing and manufacturing of the film become difficult, and the cost increases. On the other hand, when the optical path of each beam light is separated according to the wavelength by the second optical film F2/F2a of the light flux reflecting/transmitting member 16 as described above, the configuring number of optical film F2/F2a is decreased, whereby the wavefront aberration becomes smaller, designing and manufacturing are facilitated, and lower cost is further achieved. In particular, the configuring number of the optical film F2/F2a is further decreased by configuring the second optical film F2/F2a with dichroic film, whereby the wavefront aberration becomes smaller, designing and manufacturing are facilitated, and lower cost is further achieved.

The number of second optical film is decreased, the wavefront aberration becomes smaller, designing and manufacturing are facilitated, and lower cost is further achieved by arranging the optical film F2 for reflecting the BD beam light as shown in Figs. 3A to 5B, 8A and 8B rather than arranging the optical film F2a for transmitting the BD beam light having a short wavelength as shown in Figs. 10A to 12B, 14A and 14B, as the second optical film on the light flux reflecting/transmitting member 16.

The present invention may employ various modes other than the embodiment described above. For instance, an example of configuring the light flux reflecting/transmitting member with one compound prism, with one mirror and one compound prism, or with three mirrors has been described in the above embodiment, but the present invention is not limited thereto. The light flux reflecting/transmitting member may be configured with two mirrors and one prism, with two prisms and one mirror, or with three prisms, for example. Alternatively, the light flux reflecting/transmitting member may be configured from optical components other than the mirror and the prism.

An example of using one laser diode 1 for emitting the BD laser light and one laser diode 4 for emitting the DVD laser light and the CD laser light as the light source has been described in the above embodiment, but the present invention is not limited thereto. One laser diode or the like for emitting all of the BD laser light, the DVD laser light, and the CD laser light may be used as the light source, for example. Furthermore, it is possible to use a light source of one or a plurality of laser diodes or the like for emitting two types of or four or more types of laser lights corresponding to two types of or four or more types of optical discs.

An example of applying the present invention to an optical pickup capable of performing reproduction and recordation of information for three types of optical discs of BD, DVD, and CD has been described in the above embodiment, but the present invention can be applied to an optical pickup capable of performing reproduction and recordation of information for at least two or more types out of optical discs of BD, DVD, CD, or other optical discs.

## Claims

1. An optical pickup comprising:
a light source for emitting a beam light corresponding to different types of optical discs;
a first objective lens for collecting the beam light corresponding to one optical disc on the corresponding optical disc; and
a second objective lens for collecting the beam light corresponding to another optical disc on the corresponding optical disc, the optical pickup performing at least one of reproduction and recordation of information on each optical disc with the corresponding beam light, the optical pickup further comprising:
a light flux reflecting/transmitting member arranged with a first optical film and a third optical film for reflecting the beam light, and a second optical film for reflecting or transmitting the beam light, wherein
the first and second objective lenses are arranged in a radial direction of the optical disc,
the light flux reflecting/transmitting member is arranged on a side opposite to the optical disc of the first and second objective lenses,
the beam light emitted from the light source is entered to the light flux reflecting/transmitting member in a tangential direction of the optical disc, and
the light flux reflecting/transmitting member reflects the entered beam light with the first optical film to be bent in the radial direction of the optical disc, reflects one of the beam lights with the second optical film so as to make the beam light enter the first objective lens, transmits the other beam light through the second optical film and reflects the other beam light with the third optical film so as to make the other beam light enter the second objective lens.

2. The optical pickup according to claim 1, wherein the light flux reflecting/transmitting member includes one compound prism integrally arranged with the first, the second, and the third optical films.

3. The optical pickup according to claim 1, wherein the light flux reflecting/transmitting member includes one mirror integrally arranged with the first optical film and one compound prism integrally arranged with the second and the third optical films.

4. The optical pickup according to claim 1, wherein the light flux reflecting/transmitting member includes three mirrors integrally arranged with the first, the second, and the third optical films, respectively.

5. An optical pickup comprising:
a light source for emitting a beam light corresponding to different types of optical discs;
a first objective lens for collecting the beam light corresponding to one optical disc on the corresponding optical disc; and
a second objective lens for collecting the beam light corresponding to another optical disc on the corresponding optical disc, the optical pickup performing at least one of reproduction and recordation of information on each optical disc with the corresponding beam light, the optical pickup further comprising:
a light flux reflecting/transmitting member arranged with a first optical film and a third optical film for reflecting the beam light, and a second optical film for reflecting or transmitting the beam light, wherein
the first and second objective lenses are arranged in a radial direction of the optical disc,
the light flux reflecting/transmitting member is arranged on a side opposite to the optical disc of the first and second objective lenses,
the beam light emitted from the light source is entered to the light flux reflecting/transmitting member in a tangential direction of the optical disc, and
the light flux reflecting/transmitting member reflects the entered beam light with the first optical film to be bent in a thickness direction of the optical disc, transmits one of the beam lights through the second optical film so as to make the beam light enter the first objective lens, reflects the other beam light with the second optical film to be bent in the radial direction of the optical disc, and reflects the other beam light with the third optical film so as to make the other beam light enter the second objective lens.

6. The optical pickup according to claim 5, wherein the light flux reflecting/transmitting member includes one mirror integrally arranged with the first optical film and one compound prism integrally arranged with the second and the third optical films.

7. The optical pickup according to any one of claims 1 to 6, wherein
the second optical film of the light flux reflecting/transmitting member includes a wavelength selection film for selectively reflecting or transmitting each beam light according to its wavelength.

8. The optical pickup according to claim 7, wherein
the light source emits a first beam light having a first wavelength, a second beam light having a second wavelength longer than the first wavelength, and a third beam light having a third wavelength longer than the second wavelength, and
the second optical film of the light flux reflecting/transmitting member reflects the first beam light and transmits the second and third beam lights.

9. The optical pickup according to claim 7, wherein
the light source emits a first beam light having a first wavelength, a second beam light having a second wavelength longer than the first wavelength, and a third beam light having a third wavelength longer than the second wavelength, and
the second optical film of the light flux reflecting/transmitting member transmits the first beam light and reflects the second and third beam lights.

10. An optical pickup comprising:
a light source for emitting a first beam light corresponding to a BD, a second beam light corresponding to a DVD, and a third beam light corresponding to a CD;
a first objective lens for collecting the first beam light on the BD; and
a second objective lens for collecting the second or the third beam light on the DVD or the CD, the optical pickup performing at least one of reproduction and recordation of information on each optical disc with the corresponding beam light, the optical pickup further comprising:
a light flux reflecting/transmitting member including one compound prism integrally arranged with a first optical film, a second optical film, and a third optical film, wherein
the first and third optical films include a total reflection film for reflecting the beam light,
the second optical film includes a dichroic film for selectively reflecting or transmitting the beam light according to its wavelength,
the first and second objective lenses are arranged in a radial direction of the optical disc,
the light flux reflecting/transmitting member is arranged on a side opposite to the optical disc of the first and second objective lenses,
the beam light emitted from the light source is entered to the light flux reflecting/transmitting member in a tangential direction of the optical disc, and
the light flux reflecting/transmitting member reflects the entered beam light with the first optical film to be bent in the radial direction of the optical disc, reflects the first beam light with the second optical film so as to make the first beam light enter the first objective lens, transmits the second or third beam light through the second optical film, and reflects the second or third beam light with the third optical film so as to make the second or third beam light enter the second objective lens.

11. An optical pickup comprising:
a light source for emitting a first beam light corresponding to a BD, a second beam light corresponding to a DVD, and a third beam light corresponding to a CD;
a first objective lens for collecting the first beam light on the BD; and
a second objective lens for collecting the second or the third beam light on the DVD or the CD, the optical pickup performing at least one of reproduction and recordation of information on each optical disc with the corresponding beam light, the optical pickup further comprising:
a light flux reflecting/transmitting member including one mirror integrally arranged with a first optical film and one compound prism integrally arranged with a second optical film and a third optical film, wherein
the first and third optical films include a total reflection film for reflecting the beam light,
the second optical film includes a dichroic film for selectively reflecting or transmitting the beam light according to its wavelength,
the first and second objective lenses are arranged in a radial direction of the optical disc,
the light flux reflecting/transmitting member is arranged on a side opposite to the optical disc of the first and second objective lenses,
the beam light emitted from the light source is entered to the light flux reflecting/transmitting member in a tangential direction of the optical disc, and
the light flux reflecting/transmitting member reflects the entered beam light with the first optical film to be bent in a thickness direction of the optical disc, transmits the second or the third beam light with the second optical film so as to make the second or the third beam light enter the second objective lens, reflects the first beam light with the second optical film to be bent in the radial direction of the optical disc, and reflects the first beam light with the third optical film so as to make the first beam light enter the first objective lens.
